# FASCICULE DE BREVET EUROPEEN

(11) **EP 4 226 027 B1**
(45) Date de publication et mention de la délivrance du brevet: **18.03.2026**
(21) Numéro de dépôt: 21786223.4
(22) Date de dépôt: 01.10.2021
(51) Int. Cl.: F02C 7/042, F02C 7/047

(54) **ENTRÉE D'AIR D'UNE NACELLE DE TURBOMACHINE COMPORTANT UNE CONDUITE DE CIRCULATION D'UN FLUX D'AIR CHAUD ENTRE UNE PARTIE AMONT MOBILE ET UNE PARTIE AVAL FIXE**
LUFTEINLASS EINER TURBINENTRIEBWERKSGONDEL MIT EINEM KANAL ZUR ZIRKULATION EINES WARMLUFTSTROMS ZWISCHEN EINEM BEWEGLICHEN STROMAUFWÄRTS-TEIL UND EINEM STATIONÄREN STROMABWÄRTS-TEIL
AIR INTAKE OF A TURBINE ENGINE NACELLE COMPRISING A CHANNEL FOR CIRCULATING A FLOW OF HOT AIR BETWEEN A MOVABLE UPSTREAM PORTION AND A STATIONARY DOWNSTREAM PORTION

(30) Priorité: 07.10.2020 FR 2010266
(43) Date de publication de la demande: 16.08.2023
(73) Titulaire: Safran Nacelles, 76700 Gonfreville-l'Orcher (FR)
(72) Inventeur: KIOUA, Hazem, 77550 MOISSY-CRAMAYEL (FR); CARUEL, Pierre, Charles, 77550 MOISSY-CRAMAYEL (FR); JORET, Jean-Philippe, 77550 MOISSY-CRAMAYEL (FR); LAMPAERT, Charles-Antoine, 77550 MOISSY-CRAMAYEL (FR)
(74) Mandataire: Argyma
(86) Numéro de dépôt international: PCT/EP2021/077199
(87) Numéro de publication internationale: WO 2022/073891

(56) Documents cités:
- GB-A- 850 691
- US-A1- 2014 127 001

## Description

### Domaine technique

La présente invention concerne le domaine des turbomachines d'aéronef et vise plus particulièrement un dispositif de dégivrage, ou antigivrage, d'une entrée d'air d'une nacelle d'une turbomachine d'aéronef.

De manière connue, un aéronef comporte une ou plusieurs turbomachines pour permettre sa propulsion par accélération d'un flux d'air qui circule d'amont en aval dans la turbomachine. Une turbomachine comporte une nacelle afin d'optimiser les flux d'air circulant intérieurement et extérieurement à la turbomachine.

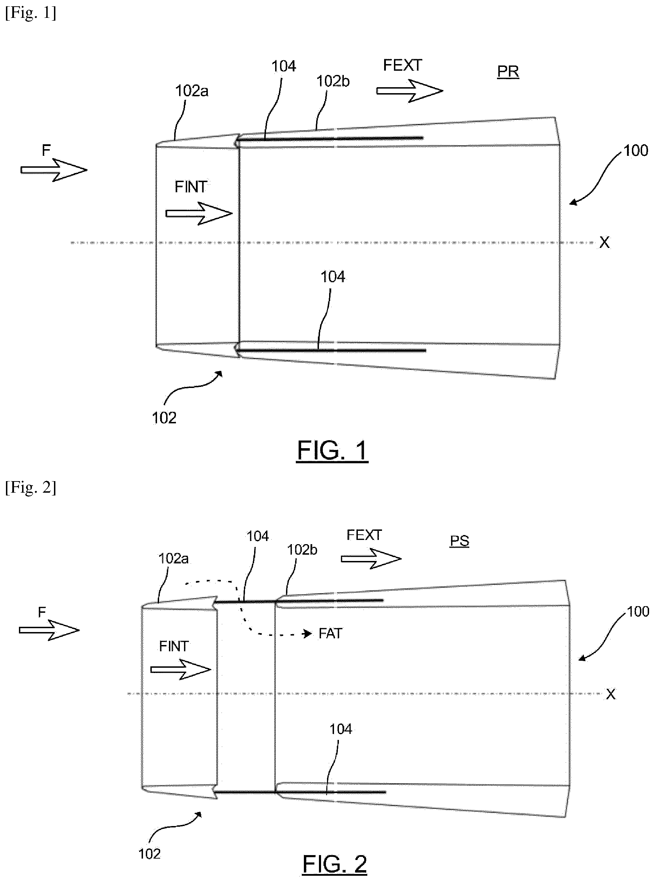

En référence à la [Fig.1], il est représenté une turbomachine 100 s'étendant selon un axe X et comportant une soufflante (non représentée) montée rotative autour de l'axe X afin d'accélérer un flux d'air F d'amont vers l'aval. Par la suite, les termes amont et aval sont définis par rapport à l'axe X orienté d'amont vers l'aval. De même, les termes intérieur et extérieur sont définis radialement par rapport à l'axe X de la turbomachine 100.

La turbomachine 100 comporte une nacelle radialement extérieure qui comprend une entrée d'air 102 s'étendant en amont de la soufflante. Une entrée d'air 102 permet de séparer le flux d'air entrant F en un flux d'air intérieur FINT qui est accéléré par la soufflante et un flux d'air extérieur FEXT qui est guidé extérieurement à la nacelle.

De manière connue, lors du vol d'un aéronef, du fait des conditions de température et de pression, du givre est susceptible de s'accumuler au niveau de l'entrée d'air pour former des blocs de givre qui sont susceptibles d'être ingérés par la turbomachine 100. De telles ingestions doivent être évitées afin d'améliorer la durée de vie de la turbomachine 100 et éviter les dysfonctionnements. Pour éviter l'accumulation de givre, il est connu de prévoir un dispositif de dégivrage dans la cavité annulaire de l'entrée d'air 102.

De manière connue, pour certains aéronefs supersoniques, il est souhaité de modifier la forme de l'entrée d'air 102 de manière à s'adapter aux divers régimes de vol (fort débit moteur à faible vitesse, faible débit à grande vitesse, etc.). A cet effet, en référence aux figures 1 et 2, il a été proposé une entrée d'air 102 comportant une partie amont mobile 102a reliée à une partie aval fixe 102b par plusieurs organes de déplacement commandables 104 de manière à définir :
- une position rentrée PR ([Fig.1]) dans laquelle la partie amont mobile 102a est adjacente à la partie aval fixe 102b afin de former une entrée d'air 102 continue ;
- une position sortie PS ([Fig.2]) dans laquelle la partie amont mobile 102a est écartée de la partie aval fixe 102b afin de former une entrée d'air 102 discontinue.

Du fait de la discontinuité, en position sortie PS, un flux d'air traversant FAT peut circuler entre la partie amont mobile 102a et la partie aval fixe 102b de l'entrée d'air 102, ce qui améliore la captation de l'air à faible vitesse.

En position rentrée PR et en position sortie PS, il est nécessaire de dégivrer la partie amont mobile 102a qui est en contact avec le flux d'air extérieur FEXT. L'intégration d'un circuit de dégivrage entre les parties 102a, 102b de l'entrée d'air 102 est complexe et augmente la masse de l'entrée d'air 102.

On connaît dans l'art antérieur par la demande de brevet GB850691A une entrée d'air comprenant des organes de déplacement commandable d'une partie amont mobile de l'entrée d'air. L'entrée d'air comporte également un circuit de dégivrage comportant une pluralité de conduites de circulation pour acheminer de l'air chaud dans la partie amont mobile. Chaque conduite de circulation se présente sous la forme d'une conduite télescopique qui comporte un cylindre intérieur monté dans un cylindre extérieur. Le cylindre extérieur s'étend de la source d'air chaud jusqu'à la partie aval fixe et possède un diamètre élevé de manière à permettre le passage d'un cylindre intérieur avec une section suffisante pour permettre un dégivrage efficace de la partie amont mobile.

Lorsque l'entrée d'air possède une faible épaisseur, une telle technologie n'est plus envisageable étant donné que le cylindre extérieur possède un diamètre trop important. Une solution immédiate pour éliminer cet inconvénient est de réduire le diamètre du cylindre extérieur. Cela implique de réduire le diamètre du cylindre intérieur et donc la section de passage, il est alors nécessaire d'augmenter le nombre de conduites de circulation pour dégivrer efficacement la partie amont mobile, ce qui augmente la masse, le coût et la complexité.

Un des objectifs de la présente invention est de permettre un dégivrage optimal d'une entrée d'air qui est longue et possède une épaisseur réduite.

### PRESENTATION DE L'INVENTION

L'invention concerne une entrée d'air d'une nacelle pour turbomachine d'aéronef s'étendant selon un axe dans lequel circule un flux d'air d'amont vers l'aval, l'entrée d'air s'étendant de manière annulaire autour de l'axe, l'entrée d'air comportant :
- une partie amont mobile et une partie aval fixe,
- au moins un organe de déplacement commandable configuré pour déplacer la partie amont mobile entre une position rentrée dans laquelle la partie amont mobile est adjacente à la partie aval fixe et une position sortie dans laquelle la partie amont mobile est écartée de la partie aval fixe afin de permettre une circulation d'un flux d'air traversant entre la partie amont mobile et la partie aval fixe et
- au moins un circuit de dégivrage comprenant au moins une conduite de circulation reliant fluidiquement la partie amont mobile et une source d'air chaud, le circuit de dégivrage est configuré pour faire circuler un flux d'air chaud dans la conduite de circulation de manière à injecter un flux d'air chaud dans la partie amont mobile.

L'invention est remarquable en ce que la conduite de circulation comporte au moins une canalisation non-télescopique amont montée coulissante à l'extrémité amont de la partie aval fixe et au moins un organe télescopique aval comportant au moins une canalisation intérieure montée dans une canalisation extérieure et en liaison fluidique avec cette dernière, la canalisation intérieure étant reliée fluidiquement à la canalisation non-télescopique amont, la canalisation extérieure étant reliée fluidiquement à la source d'air chaud.

Grâce à l'invention, l'organe télescopique est positionné en aval dans la partie fixe afin de limiter les contraintes d'encombrement. Cela permet de réduire l'épaisseur de l'entrée d'air, ce qui est avantageux pour un aéronef supersonique. En outre, en position sortie ou en position rentrée, les performances de dégivrage sont équivalentes.

La canalisation intérieure est configurée pour se déplacer uniquement dans la partie aval fixe. Autrement dit, la canalisation intérieure de l'organe télescopique ne s'étend avantageusement pas entre la partie amont mobile et la partie aval fixe en position sortie. L'organe télescopique est avantageusement déporté vers l'aval, ce qui limite l'encombrement au niveau du bord amont de partie aval fixe. Les dilatations thermiques de l'organe télescopique peuvent être atténuées plus simplement en aval dans un volume plus grand.

De manière préférée, au moins une extrémité de l'organe télescopique aval est équipée d'un organe de compensation des défauts d'alignement, de préférence, un joint piston, un soufflet ou une rotule de guidage. De préférence, chaque extrémité de l'organe télescopique aval est équipée d'un organe de compensation des défauts d'alignement. Du fait de l'espace disponible en aval, un ou plusieurs organes de compensation des défauts d'alignement peuvent être mis en place pour corriger les imprécisions lors du déploiement/repliement ou lors du montage.

Selon un aspect de l'invention, l'organe de déplacement commandable est relié directement à la conduite de circulation, de préférence, directement à la canalisation non-télescopique amont de la conduite de circulation. Autrement, seules les conduites de circulation sont configurées pour déplacer la partie amont.

Ainsi, de manière avantageuse, il n'est pas nécessaire de prévoir des moyens de commande dédiés au déplacement dans l'entrée d'air. La conduite de circulation remplit une double fonction de déplacement et de dégivrage. En outre, cela évite le givrage d'organes de déplacement qui seraient dédiés uniquement au déplacement.

De manière préférée, la partie aval fixe possède, au niveau de son extrémité amont, une épaisseur radiale inférieure à 180mm. Une telle entrée d'air est avantageuse pour améliorer les performances aérodynamiques d'un aéronef supersonique.

Selon un aspect, la canalisation non-télescopique amont possède une longueur au moins 2 fois supérieure à l'organe télescopique en position rétractée.

De préférence, l'organe télescopique aval est au moins doublement télescopique, de préférence, triplement télescopique de manière à permettre un déplacement axial important tout en limitant l'encombrement.

L'invention concerne également une nacelle pour turbomachine d'aéronef, la nacelle comprenant au moins une entrée d'air telle que présentée précédemment.

L'invention concerne également un aéronef supersonique comprenant au moins une turbomachine montée dans une nacelle telle que présentée précédemment.

L'invention concerne également un procédé de dégivrage d'une entrée d'air telle que présentée précédemment, comprenant une étape de circulation d'un flux d'air chaud dans la conduite de circulation de manière à dégivrer la partie amont mobile en position rentrée et en position sortie.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig.1] La [Fig.1] est une représentation schématique d'une entrée d'air de nacelle selon l'art antérieur en position rentrée.
[Fig.2] La [Fig.2] est une représentation schématique d'une entrée d'air de nacelle selon l'art antérieur en position sortie.
[Fig.3] La [Fig.3] est une représentation schématique d'une entrée d'air de nacelle selon l'invention en position rentrée.
[Fig.4] La [Fig.4] est une représentation schématique d'une entrée d'air de nacelle selon l'invention en position sortie.
[Fig.5] La [Fig.5] est une représentation schématique rapprochée de l'organe télescopique de la [Fig.3].
[Fig.6] La [Fig.6] est une représentation schématique rapprochée d'une autre forme de réalisation de l'entrée d'air.
[Fig.7] La [Fig.7] est une représentation schématique en perspective d'une autre forme de réalisation de l'entrée d'air.
[Fig.8] La [Fig.8] est une représentation schématique d'un aéronef comportant un ensemble d'un turbomoteur et d'une entrée d'air.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

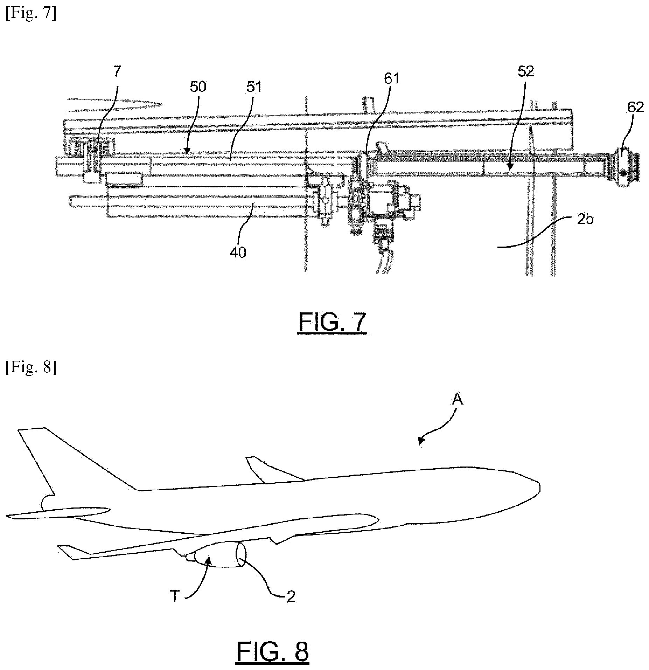

L'invention va être présentée pour un aéronef A comprenant au moins une turbomachine T comme illustré à la [Fig.8], la turbomachine T étant équipée d'une nacelle avec une entrée d'air 2 selon l'invention.

L'invention trouve une application avantageuse pour un aéronef supersonique A, c'est-à-dire, apte à se déplacer à une vitesse supérieure à celle du son. La [Fig.8] représente l'aéronef A de manière schématique, ce dernier pouvant avoir une forme très différente.

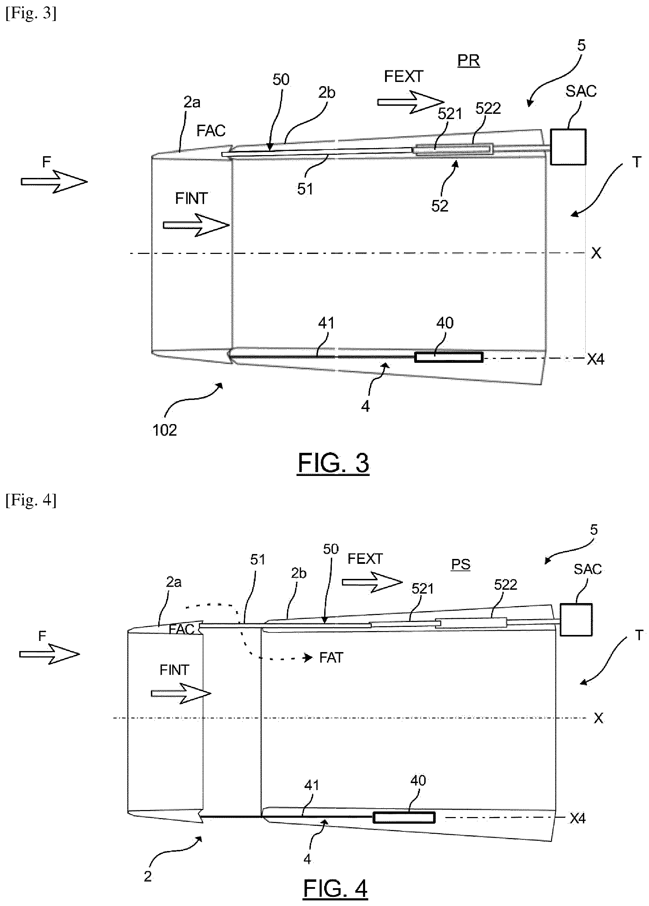

En référence aux figures 3 et 4, il est représenté une turbomachine T, selon une forme de réalisation de l'invention, s'étendant selon un axe X et comportant une soufflante (non représentée) montée rotative autour de l'axe X afin d'accélérer un flux d'air F d'amont vers l'aval. Par la suite, les termes amont et aval sont définis par rapport à l'axe X orienté d'amont vers l'aval. De même, les termes intérieur et extérieur sont définis radialement par rapport à l'axe X de la turbomachine T. Dans cet exemple, la turbomachine T est un turboréacteur.

La turbomachine T comporte une nacelle radialement extérieure qui comprend une entrée d'air 2 s'étendant en amont de la soufflante. Une entrée d'air 2 permet de séparer le flux d'air entrant F en un flux d'air intérieur FINT qui est accéléré par la soufflante et un flux d'air extérieur FEXT qui est guidé extérieurement à la nacelle.

Comme illustré aux figures 3 et 4, l'entrée d'air 2 comporte une partie amont mobile 2a et une partie aval fixe 2b et au moins un organe de déplacement commandable 4 configuré pour déplacer la partie amont mobile 2a entre :
- une position rentrée PR ([Fig.3]) dans laquelle la partie amont mobile 2a est adjacente à la partie aval fixe 2b et
- une position sortie PS ([Fig.4]) dans laquelle la partie amont mobile 2a est écartée de la partie aval fixe 2b afin de permettre une circulation d'air traversant FAT entre la partie amont mobile 2a et la partie aval fixe 2b.

Comme illustré à la [Fig.3], en position rentrée PR, la partie amont mobile 2a et la partie aval fixe 2b sont en contact afin de former une entrée d'air 2 continue. A l'inverse, comme illustré à la [Fig.4] représentant la position sortie PS, l'entrée d'air 2 est discontinue et un flux d'air traversant FAT peut circuler entre la partie amont mobile 2a et la partie aval fixe 2b depuis l'extérieur vers l'intérieur, ce qui améliore la captation de l'air à faible vitesse. De manière préférée, l'organe de déplacement commandable 4 est configuré pour déplacer la partie amont mobile 2a vers l'amont.

Dans cet exemple de réalisation, l'entrée d'air 2 comporte plusieurs organes de déplacement commandable 4 qui sont répartis à la périphérie de l'entrée d'air 2 afin de permettre un déplacement robuste et précis. Il va de soi que le nombre d'organes de déplacement commandable 4 pourrait être différent ainsi que leur positionnement.

Dans cette forme de réalisation, en référence aux figures 3 et 4, chaque organe de déplacement commandable 4 comporte une tige mobile 41 solidaire de la partie amont mobile 2a de l'entrée d'air 2 qui s'étend longitudinalement selon un axe X4 qui est sensiblement parallèle à l'axe de turbomachine X. L'organe de déplacement commandable 4 comporte un actionneur 40 configuré pour déplacer la tige mobile 41 en translation selon l'axe X4 entre la position de sortie PS et la position rentrée PR.

Selon l'invention, toujours en référence aux figures 3 et 4, l'entrée d'air 2 comporte un circuit de dégivrage 5 qui est configuré pour dégivrer la partie amont mobile 2a qui est en contact avec le flux d'air en position rentrée PR. En position sortie PS, le circuit de dégivrage 5 est configuré pour dégivrer la partie amont mobile 2a, qui est en contact avec le flux d'air extérieur FEXT.

A cet effet, le circuit de dégivrage 5 comporte plusieurs conduites de circulation 50 reliant fluidiquement la partie amont mobile 2a et une source d'air chaud SAC. Le circuit de dégivrage 5 est configuré pour faire circuler un flux d'air chaud FAC dans les conduites de circulation 50 de manière à injecter un flux d'air chaud FAC dans la partie amont mobile 2a.

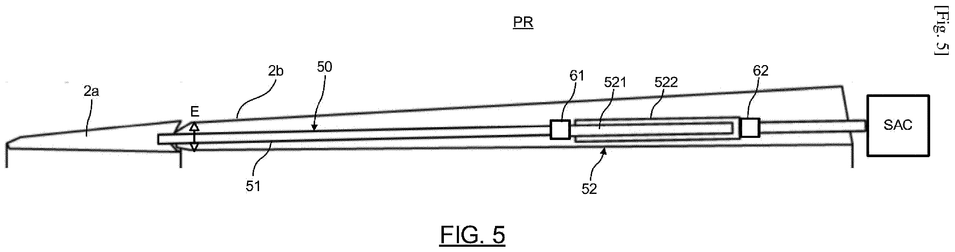

Dans cet exemple, en référence à la [Fig.5], l'entrée d'air 2 possède une épaisseur faible, c'est-à-dire, la partie aval fixe 2b possède, au niveau de son extrémité amont, une épaisseur radiale E inférieure à 180mm. Pour un aéronef supersonique A, une telle finesse améliore les performances aérodynamiques mais elle est pénalisante pour le dégivrage comme expliqué précédemment. Bien que l'invention soit née à l'origine pour une entrée d'air 2 d'épaisseur fine, l'invention s'applique de manière avantageuse à une entrée d'air 2 dont l'épaisseur est quelconque.

Selon l'invention, comme illustré à la [Fig.3], la conduite de circulation 50 comporte au moins une canalisation non-télescopique amont 51 montée coulissante à l'extrémité amont de la partie aval fixe 2b et configurée pour s'étendre entre la portion amont 2a et la portion aval 2b en position sortie PS et au moins un organe télescopique aval 52 comportant une canalisation intérieure 521 montée dans une canalisation extérieure 522 et en liaison fluidique avec cette dernière, la canalisation intérieure 521 étant reliée fluidiquement à la canalisation non-télescopique amont 51, la canalisation extérieure 522 étant reliée fluidiquement à la source d'air chaud SAC. De manière préférée, la canalisation non-télescopique amont 51 possède une section constante.

De manière avantageuse, un déport en aval de l'organe télescopique 52 permet de réduire l'encombrement et la masse au niveau de l'extrémité amont de la partie aval fixe 2b de l'entrée d'air 2. Cela permet avantageusement de réduire le porte-à-faux ainsi que l'épaisseur de l'entrée d'air 2. Cela est particulière avantageux pour un aéronef supersonique A dont l'entrée d'air est longue et fine pour des raisons aérodynamiques. La maintenance de l'organe télescopique 52 est en outre facilitée étant donné que les contraintes d'encombrement sont plus faibles en aval.

La canalisation intérieure 521 est configurée pour se déplacer uniquement dans la partie aval fixe 2b. Autrement dit, elle ne s'étend pas entre la portion amont 2a et la portion aval 2b en position sortie PS. Cela est particulièrement avantageux pour assurer un guidage optimal de l'organe télescopique 52.

Dans cet exemple, l'organe télescopique 52 est du type simple et comporte uniquement une canalisation intérieure 521 et une canalisation extérieure 522. Il va de soi que l'organe télescopique 52 pourrait comprendre plusieurs canalisations emboitées les unes dans les autres. En particulier, l'organe télescopique 52 pourrait être du type double et comporter une canalisation intérieure 521 montée dans une canalisation centrale montée elle-même dans une canalisation extérieure 522. Un tel organe télescopique permet de réduire l'encombrement de manière importante. L'organe télescopique 52 pourrait également être triplement télescopique.

Le déploiement de l'organe télescopique 52 est réalisé au moyen d'un actionneur commandé (déploiement actif) ou de manière passive suite au déplacement de la partie amont mobile 2a de l'entrée d'air 2.

Selon un aspect préféré de l'invention, en référence à la [Fig.5], au moins une extrémité de l'organe télescopique 52 est équipée d'un organe de compensation des défauts d'alignement 61, 62. Dans cet exemple, chaque organe de compensation des défauts d'alignement 61, 62 se présente sous la forme d'une rotule mais il va de soi qu'il pourrait se présenter sous la forme d'un joint piston ou d'un soufflet. De préférence, chaque extrémité de l'organe télescopique 52 est équipée d'un organe de compensation des défauts d'alignement 61, 62 de manière à limiter les débattements avec, d'une part, la canalisation non-télescopique amont 51 montée coulissante à l'extrémité amont de la partie aval fixe 2b et, d'autre part, la source d'air chaud SAC. Du fait du positionnement en aval, il est possible de prévoir de tels organes de compensation 61, 62 sans augmenter la complexité et l'encombrement au niveau du bord amont de la partie fixe 2b.

Afin de garantir une étanchéité optimale lors du déploiement/repliement de l'organe télescopique 52, celui-ci est équipé de manière connue d'organes d'étanchéité entre les différentes canalisations consécutives qu'il comporte.

Dans cette première forme de réalisation, en référence aux figures 3 et 4, le circuit de dégivrage 5 est indépendant des organes de déplacement commandables 4. De manière préférée, chaque conduite de circulation 50 est déployée de manière indirecte par le déploiement des organes de déplacement commandables 4. Autrement dit, chaque conduite de circulation 50 est déployée de manière passive suite au déplacement de la partie amont mobile 2a de l'entrée d'air 2 par les organes de déplacement commandables 4.

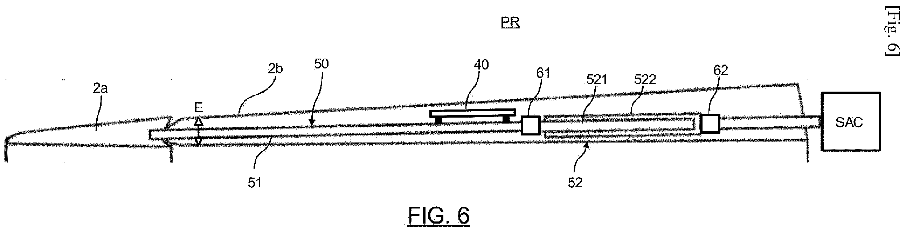

Dans cette deuxième forme de réalisation, en référence aux figures 6 et 7, au moins une conduite de circulation 50 est un organe de déplacement commandable 4. Une telle caractéristique permet de réduire l'encombrement de manière importante, ce qui est avantageux pour une partie aval fixe 2b qui possède une très faible épaisseur.

L'organe de déplacement commandable 4 est utilisé comme moyen de conduction du flux d'air chaud FAC et il n'est pas nécessaire de prévoir des moyens techniques supplémentaires qui viendraient pénaliser la masse et l'encombrement. Dans cette forme de réalisation, tous les organes de déplacement commandable 4 sont configurés pour conduire un flux d'air chaud FAC mais il va de soi que seuls certains pourraient être utilisés dans ce but.

A cet effet, en référence aux figures 6 et 7, un actionneur 40 est relié directement à la conduite de circulation 50 pour déplacer l'organe télescopique 52, c'est-à-dire, pour déplacer sa canalisation intérieure 521 par rapport à sa canalisation extérieure 522. La conduite de circulation 50 est ainsi déplacée de manière active.

Selon un aspect préféré, l'actionneur 40 est relié directement à la canalisation non-télescopique amont 51 de manière à limiter les contraintes appliquées à l'organe télescopique 52 et ainsi améliorer sa durée de vie. Ainsi, la canalisation non-télescopique amont 51 remplit la même fonction que la tige mobile 41 de la [Fig.3]. Comme illustré à la [Fig.7], la canalisation non-télescopique amont 51 est guidée en translation par des guides 7 répartis longitudinalement.

Un exemple de mise en œuvre va être présenté en référence aux figures 3 et 4. Lors du vol de l'aéronef dans des conditions nécessitant l'activation du dégivrage, la source d'air chaud SAC alimente successivement l'organe télescopique 52 et la canalisation non-télescopique 51 avec un flux d'air chaud FAC.

Selon des premières conditions de vol de l'aéronef, l'entrée d'air 2 est en position rentrée PR comme illustré à la [Fig.3]. Dans cette position rentrée PR, la partie amont mobile 2a est adjacente à la partie aval fixe 2b de l'entrée d'air 2 et. L'organe de déplacement commandable 4 est en position retirée vers l'aval l'organe télescopique 52 est replié. La conduite de circulation alimente la partie amont mobile 2a de l'entrée d'air 2 comme illustré à la [Fig.3].

Lorsque des deuxièmes conditions de vol de l'aéronef sont détectées, l'organe de déplacement commandable 4 est activé de manière à déplacer la partie amont mobile 2a en translation selon l'axe X4 vers l'amont. L'entrée d'air 2 est alors en position sortie PS comme illustré à la [Fig.4].

Dans cette position sortie PS, la partie amont mobile 2a est écartée de la partie aval fixe 2b de l'entrée d'air 2, ce qui autorise le flux d'air traversant FAT à entrer en contact avec la partie aval fixe 2b de l'entrée d'air 2. Suite à l'activation de l'organe de déplacement commandable 4, l'organe de déplacement commandable 4 est en position sortie PS vers l'amont. La canalisation non-télescopique 51 s'étend entre la partie amont mobile 2a et la partie aval fixe 2b de l'entrée d'air 2, c'est-à-dire, en contact avec le flux d'air traversant FAT pour acheminer un flux d'air chaud FAC.

## Revendications

1. Entrée d'air (2) d'une nacelle pour turbomachine (T) d'aéronef s'étendant selon un axe (X) dans lequel circule un flux d'air (F) d'amont vers l'aval, l'entrée d'air (2) s'étendant de manière annulaire autour de l'axe (X), l'entrée d'air (2) comportant :
- une partie amont mobile (2a) et une partie aval fixe (2b),
- au moins un organe de déplacement commandable (4) configuré pour déplacer, pendant le fonctionnement de la turbomachine (T), la partie amont mobile (2a) entre une position rentrée (PR) dans laquelle la partie amont mobile (2a) est adjacente à la partie aval fixe (2b) et une position sortie (PS) dans laquelle la partie amont mobile (2a) est écartée de la partie aval fixe (2b) afin de permettre une circulation d'un flux d'air traversant (FAT) entre la partie amont mobile (2a) et la partie aval fixe (2b),
- au moins un circuit de dégivrage (5) comprenant au moins une conduite de circulation (50) reliant fluidiquement la partie amont mobile (2a) et une source d'air chaud (SAC), le circuit de dégivrage (5) est configuré pour faire circuler un flux d'air chaud (FAC) dans la conduite de circulation (50) de manière à injecter un flux d'air chaud (FAC) dans la partie amont mobile (2a), entrée d'air **caractérisée par le fait que** la conduite de circulation (50) comporte :
- au moins une canalisation non-télescopique amont (51) montée coulissante à l'extrémité amont de la partie aval fixe (2b) et
- au moins un organe télescopique aval (52) comportant au moins une canalisation intérieure (521) montée dans une canalisation extérieure (522) et en liaison fluidique avec cette dernière, la canalisation intérieure (521) étant reliée fluidiquement à la canalisation non-télescopique amont (51), la canalisation extérieure (522) étant reliée fluidiquement à la source d'air chaud (SAC), la canalisation intérieure (521) étant configurée pour se déplacer uniquement dans la partie aval fixe (2b).

2. Entrée d'air (2) selon la revendication 1, dans laquelle au moins une extrémité de l'organe télescopique aval (52) est équipée d'un organe de compensation des défauts d'alignement (61, 62), de préférence, un joint piston, un soufflet ou une rotule de guidage.

3. Entrée d'air (2) selon l'une des revendications 1 et 2, dans laquelle l'organe de déplacement commandable (4) est relié directement à la conduite de circulation (50), de préférence, directement à la canalisation non-télescopique amont (51) de la conduite de circulation (50).

4. Entrée d'air (2) selon l'une des revendication 1 à 3, dans laquelle la partie aval fixe (2b) possède, au niveau de son extrémité amont, une épaisseur radiale (E) inférieure à 180mm.

5. Entrée d'air (2) selon l'une des revendication 1 à 4, dans laquelle la canalisation non-télescopique amont (51) possède une longueur au moins 2 fois supérieure à l'organe télescopique (52) en position rétractée.

6. Entrée d'air (2) selon l'une des revendication 1 à 5, dans laquelle l'organe télescopique aval (52) est au moins doublement télescopique, de préférence, triplement télescopique.

7. Nacelle pour turbomachine (T) d'aéronef, la nacelle comprenant au moins une entrée d'air (2) selon l'une des revendications 1 à 6.

8. Aéronef supersonique (A) comprenant au moins une turbomachine (T) montée dans une nacelle selon la revendication 7.

9. Procédé de dégivrage d'une entrée d'air (2) selon l'une des revendications 1 à 6, comprenant une étape de circulation d'un flux d'air chaud (FAC) dans la conduite de circulation (50) de manière à dégivrer la partie amont mobile (2a) en position rentrée (PR) et en position sortie (PS).

## Patentansprüche

1. Lufteinlass (2) einer Gondel für eine Turbomaschine (T) eines Flugzeugs, die sich gemäß einer Achse (X) erstreckt, in der ein Luftstrom (F) von stromaufwärts nach stromabwärts zirkuliert, wobei sich der Lufteinlass (2) ringförmig um die Achse (X) erstreckt, wobei der Lufteinlass (2) aufweist:
- einen beweglichen stromaufwärtigen Teil (2a) und einen feststehenden stromabwärtigen Teil (2b),
- mindestens ein steuerbares Verstellelement (4), das ausgelegt ist, um während des Betriebs der Turbomaschine (T) den beweglichen stromaufwärtigen Teil (2a) zwischen einer eingefahrenen Position (PR), in der der bewegliche stromaufwärtige Teil (2a) an den feststehenden stromabwärtigen Teil (2b) angrenzt, und einer ausgefahrenen Position (PS) bewegt, in der der bewegliche stromaufwärtige Teil (2a) vom feststehenden stromabwärtigen Teil (2b) beabstandet ist, um eine Zirkulation eines durchströmenden Luftstroms (FAT) zwischen dem beweglichen stromaufwärtigen Teil (2a) und dem feststehenden stromabwärtigen Teil (2b) zu erlauben,
- mindestens einen Enteisungskreis (5), der mindestens eine Zirkulationsleitung (50) umfasst, die den beweglichen stromaufwärtigen Teil (2a) und eine Warmluftquelle (SAC) fluidisch verbindet, wobei der Enteisungskreis (5) dazu ausgelegt ist, damit ein Warmluftstrom (FAC) in der Zirkulationsleitung (50) derart zirkuliert, dass ein Warmluftstrom (FAC) in den beweglichen stromaufwärtigen Teil (2a) eingeleitet wird, wobei der Lufteinlass **dadurch gekennzeichnet ist, dass** die Zirkulationsleitung (50) aufweist:
- mindestens einen nicht-teleskopischen stromaufwärtigen Kanal (51), der am stromaufwärtigen Ende des feststehenden stromabwärtigen Teils (2b) verschiebbar angebracht ist, und
- mindestens ein stromabwärtiges Teleskopelement (52), das mindestens einen inneren Kanal (521) aufweist, der in einem äußeren Kanal (522) angebracht ist und mit diesem in Fluidverbindung steht, wobei der innere Kanal (521) mit dem nicht-teleskopischen stromaufwärtigen Kanal (51) fluidisch verbunden ist, wobei der äußere Kanal (522) mit der Warmluftquelle (SAC) fluidisch verbunden ist, wobei der innere Kanal (521) ausgelegt ist, um sich nur im feststehenden stromabwärtigen Teil (2b) zu bewegen.

2. Lufteinlass (2) nach Anspruch 1, wobei mindestens ein Ende des stromabwärtigen Teleskopelements (52) mit einem Ausgleichselement für Ausrichtungsfehler (61, 62), vorzugsweise einer Kolbendichtung, einem Balg oder einem Führungskugelgelenk, ausgestattet ist.

3. Lufteinlass (2) nach einem der Ansprüche 1 bis 2, wobei das steuerbare Verstellelement (4) direkt mit der Zirkulationsleitung (50), vorzugsweise direkt mit dem nicht-teleskopischen stromaufwärtigen Kanal (51) der Zirkulationsleitung (50), verbunden ist.

4. Lufteinlass (2) nach einem der Ansprüche 1 bis 3, wobei der feststehende stromabwärtige Teil (2b) im Bereich seines stromaufwärtigen Endes eine radiale Dicke (E) von weniger als 180 mm besitzt.

5. Lufteinlass (2) nach einem der Ansprüche 1 bis **4,** wobei der nicht-teleskopische stromaufwärtige Kanal (51) eine Länge besitzt, die mindestens zweimal größer als das Teleskopelement (52) in eingefahrener Position ist.

6. Lufteinlass (2) nach einem der Ansprüche 1 bis 5, wobei das stromabwärtige Teleskopelement (52) mindestens doppelt teleskopisch, vorzugsweise dreifach teleskopisch, ist.

7. Gondel für eine Turbomaschine (T) eines Flugzeugs, wobei die Gondel mindestens einen Lufteinlass (2) nach einem der Ansprüche 1 bis 6 umfasst.

8. Überschallflugzeug (A), umfassend mindestens eine Turbomaschine (T), die in einer Gondel nach Anspruch 7 eingebaut ist.

9. Verfahren zum Enteisen eines Lufteinlasses (2) nach einem der Ansprüche 1 bis 6, umfassend einen Schritt des Zirkulierens eines Warmluftstroms (FAC) in der Zirkulationsleitung (50), um den beweglichen stromaufwärtigen Teil (2a) in der eingefahrenen Position (PR) und in der ausgefahrenen Position (PS) zu enteisen.

## Claims

1. An air inlet (2) of a nacelle for an aircraft turbomachine (T) extending along an axis (X) in which an air flow (F) circulates from upstream to downstream, the air inlet (2) extending annularly about the axis (X), the air inlet (2) comprising:
• a movable upstream part (2a) and a fixed downstream part (2b),
• at least one controllable moving member (4) configured to move, during the operation of the turbomachine (T), the movable upstream part (2a) between a retracted position (PR) in which the movable upstream part (2a) is adjacent to the fixed downstream part (2b), and an extended position (PS) in which the movable upstream part (2a) is moved away from the fixed downstream part (2b) in order to allow circulation of a through air flow (FAT) between the movable upstream part (2a) and the fixed downstream part (2b),
• at least one de-icing circuit (5) comprising at least one circulation conduit (50) fluidly connecting the moving upstream part (2a) and a source of hot air (SAC), the de-icing circuit (5) is configured to circulate a hot air flow (FAC) in the circulation conduit (50) so as to inject a hot air flow (FAC) into the moving upstream part (2a), which air inlet is **characterized in that** the circulation conduit (50) comprises:
• at least one upstream non-telescopic piping (51) slidably mounted at the upstream end of the fixed downstream part (2b) and
• at least one downstream telescopic member (52) comprising at least one internal piping (521) mounted in an external piping (522) and in fluid connection with the same, the internal piping (521) being fluidly connected to the upstream non-telescopic piping (51), the external piping (522) being fluidly connected to the source of hot air (SAC), the internal piping (521) being configured to move only in the fixed downstream part (2b).

2. The air inlet (2) according to claim 1, wherein at least one end of the downstream telescopic member (52) is fitted with a misalignment compensation member (61, 62), preferably a piston seal, a bellows, or a guide ball joint.

3. The air inlet (2) according to one of claims 1 to 2, wherein the controllable moving member (4) is directly connected to the circulation conduit (50), preferably directly to the upstream non-telescopic piping (51) of the circulation conduit (50).

4. The air inlet (2) according to one of claims 1 to 3, wherein the fixed downstream part (2b) has, at its upstream end, a radial thickness (E) of less than 180 mm.

5. The air inlet (2) according to one of claims 1 to 4, wherein the upstream non-telescopic piping (51) has a length at least 2 times higher than the telescopic member (52) in the retracted position.

6. The air inlet (2) according to one of claims 1 to 5, wherein the downstream telescopic member (52) is at least double telescopic, preferably triple telescopic.

7. A nacelle for an aircraft turbomachine (T), the nacelle comprising at least one air inlet (2) according to one of claims 1 to 6.

8. A supersonic aircraft (A) comprising at least one turbomachine (T) mounted in a nacelle according to claim 7.

9. A method for de-icing an air inlet (2) according to one of claims 1 to 6, comprising a step of circulating a hot air flow (FAC) in the circulation conduit (50) in such a way as to de-ice the moving upstream part (2a) in the retracted position (PR) and in the extended position (PS).
